# NEW EUROPEAN PATENT SPECIFICATION

(11) **EP 1 598 281 B2**
(45) Date of publication and mention of the opposition decision: **02.10.2013**
(45) Mention of the grant of the patent: 11.04.2007
(21) Application number: 05002442.1
(22) Date of filing: 04.02.2005
(51) Int. Cl.: B65D 37/00

(54) **Piping bag, blank for manufacturing a piping bag and method for manufacturing a piping bag**
Spritzbeutel, Zuschnitt zur Herstellung eines Spritzbeutels und Herstellmethode zur Herstellung eines Spritzbeutels
Poche à douille, ébauche pour produire une poche à douille, et procédé pour la production d'une poche à douille

(30) Priority: 26.05.2004 SE 0401356
(43) Date of publication of application: 23.11.2005
(60) Divisional application: 07105655.0
(73) Proprietor: Kee Plastics AB, 60102 Norrköping (SE)
(72) Inventor: Ejeblad, Allan, SE-610 50 Jönaker (SE)
(74) Representative: Bokinge, Ole

(56) References cited:
- CH-A- 270 816
- DE-A1- 2 648 376
- DE-A1- 3 412 254
- FR-A- 2 001 615
- GB-A- 884 050
- US-A- 3 157 312
- US-A- 4 045 270
- US-A- 4 560 598
- US-A- 4 961 517
- US-A- 5 366 116
- US-A1- 2003 091 702
- US-B1- 6 179 165

## Description

### Field of the Invention

The present invention relates to disposable piping bags as defined in the preamble to claim 1, and more specifically to disposable piping bags used for the handling of foodstuffs.

### Background Art

Piping bags are mainly used for decorating pastries, confectionery or food with a viscous, semi-liquid or semi-fluid paste, such as whipped cream, marzipan, dough, cream cheese, sugar paste or the like. Piping bags can also be used for other purposes, for example for the application of glue, cement, plaster, moulding compound or the like.

A disposable piping bag is shown in US 3,157,312. This piping bag consists of a plastic bag, formed from two layers of polymer film, which have been welded together along the edges of the bag. The piping bag is adapted, at one of its corners, to receive an essentially conical nozzle, through which a paste contained in the piping bag can be discharged. The nozzle can be provided with a selected profile, so that the extruded paste string can be given the desired appearance.

US-2003/0091702 discloses another disposable piping bag, which is provided with a nuzzle having a structured exterior surface.

A problem associated with prior art disposable piping bags is that the piping bag can be difficult to handle both during manufacturing and in connection with the dispensing operation.

Therefore, there is a need for an improved disposable piping bag.

### Summary of the Invention

An object of the present invention is to provide a disposable piping bag, which reduces or eliminates the problems associated with prior art.

The object is achieved by a piping bag, a blank and a method according to the respective appended independent claims. Embodiments are defined in the appended dependent claims as well as in the following description and drawings.

The invention provides a piping bag, a blank and a method according to the independent claims.

*Disposable* here means that the piping bag is to be discarded after use, and not cleaned and used again. However, this does not exclude that the piping bag is filled again and/or cleaned and, thus, used to spread more than one batch of flowable paste. In fact, *disposable* means that it must be possible to manufacture the piping bag in large quantities at a very low cost.

*Surface structure* here means the three-dimansional structure of the surface

The surface structure of the piping bag reduces the risk of it slipping from the user's grip, especially if the user's hand, which may be fitted with a glove, is wet or smeared with, for example, oil or grease. With a friction-enhancing agent being added, a surface structure may be advantageous because it creates a space between two abutting layers of polymer tube or piping bags, said space eliminating or reducing the risk of the layers adhering to one another, which would make handling more difficult.

### Brief Description of the Drawings

Fig. 1 is a schematic perspective view of a piping bag.
Fig. 2 is a schematic plan view of the piping bag in Fig. 1.
Fig. 3 is a perspective view illustrating the step of rolling a polymer tube to form the piping bag in Fig. 1.
Fig. 4 is a plan view of a blank for forming the piping bag in Fig. 1.
Fig. 5 illustrates a first example of a surface structure.
Fig. 6 illustrates a second example of a surface structure.
Fig. 7 illustrates a third example of a surface structure.
Fig. 8 illustrates a fourth example of a surface structure.

### Description of Preferred Embodiments

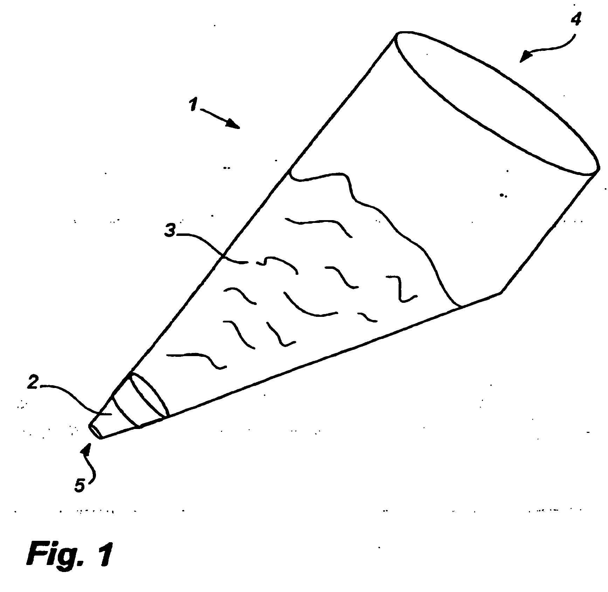

Fig. 1 shows a piping bag 1, which at a dispensing orifice 5 is provided with a nozzle 2 and which through an open end 4 has been filled with a flowable paste 3. The flowable paste 3 is dispensable through the nozzle 2 when the open end 4 of the piping bag 1 is closed, for example folded, and the piping bag 1 compressed.

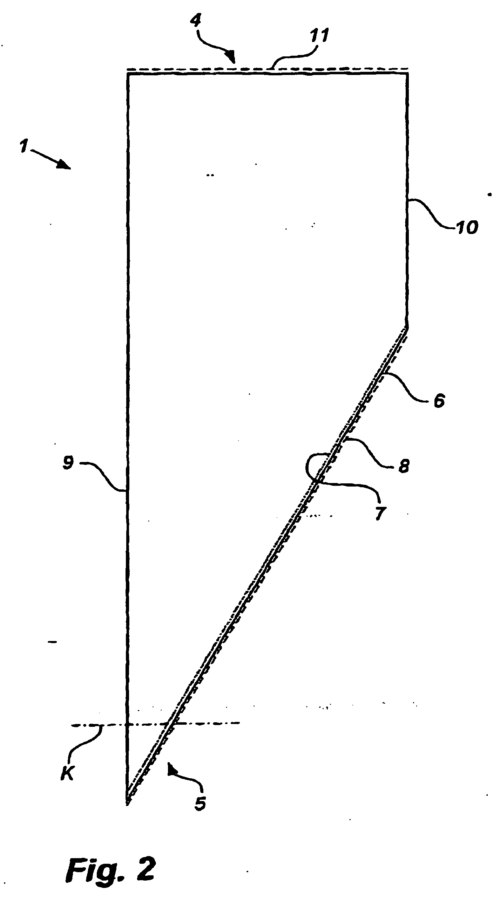

With reference to Fig. 2, the piping bag 1 is formed from a polymer tube segment, preferably of polyolefin plastic, such as polyethylene, polypropylene or the like. When unfilled, as shown in Fig. 2, the piping bag 1 has an essentially two-dimensional extension, its shape being defined by two parallel creases at the edges 9, 10, formed by the polymer tube being collapsed, and a joint 7 that is obliquely transversal to the edges 9, 10. A severance mark 8 runs parallel to the joint 7, which mark 8 is achieved in a manner obvious to a person skilled in the art, for example by means of perforation. At the open end 4 of the piping bag 1, a severance mark 11 extends perpendicularly to the edges 9, 10. At the open end, a weaker welding joint (not shown) may be provided, which is such that upon tearing along the severance mark 11, the piping bag remains closed until a user deliberately opens it. According to one embodiment, this weaker welding joint can be achieved at a low temperature and under mechanical pressure.

To enable dispensing by means of the piping bag 1, it is cut at the cutting line K, so that an orifice 5 of a desired size is obtained. In the orifice, the nozzle 2 can be applied or, alternatively, the piping bag can be used without a nozzle.

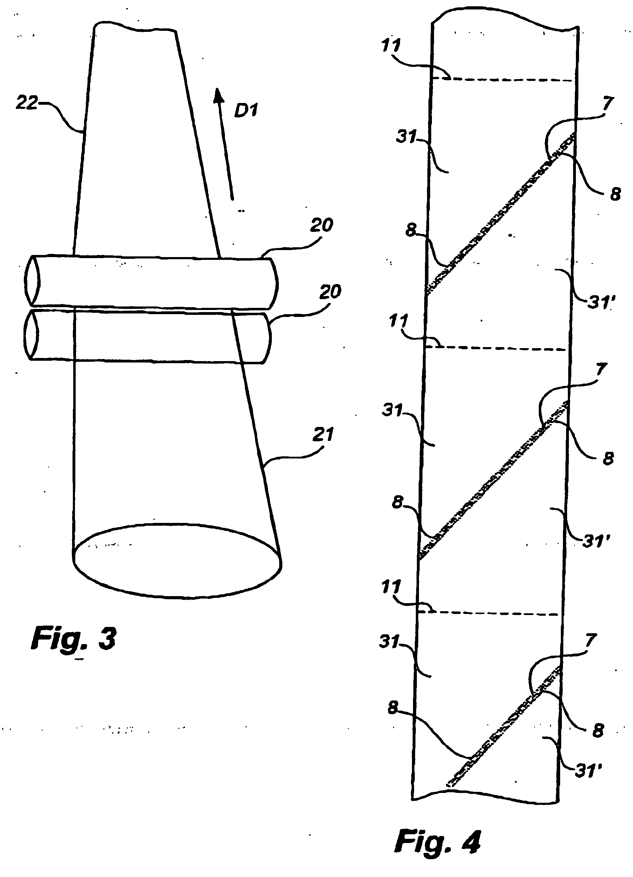

Fig. 3 shows how a polymer tube 21 for manufacturing piping bags is collapsed by it being caused to travel through rollers 20 to form an essentially two-dimensional elongate blank 22 with double layers. The skilled person is familiar with forming a polymer tube through film blowing.

Fig. 4 shows how the double layer blank 22 has been provided with oblique welding joints 7 and severance marks B, 11 for the purpose of defining piping bags 31, 31'.

The piping bag can be essentially transparent, i.e. transparent to such a degree that its contents are visible through the limiting surfaces of the piping bag. According to one embodiment, the piping bag may be tinted.

An outwardly oriented surface of the piping bag 1 is provided with a surface structure, which improves the grip, i.e. its roughness increases the friction between the user's hand and the piping bag.

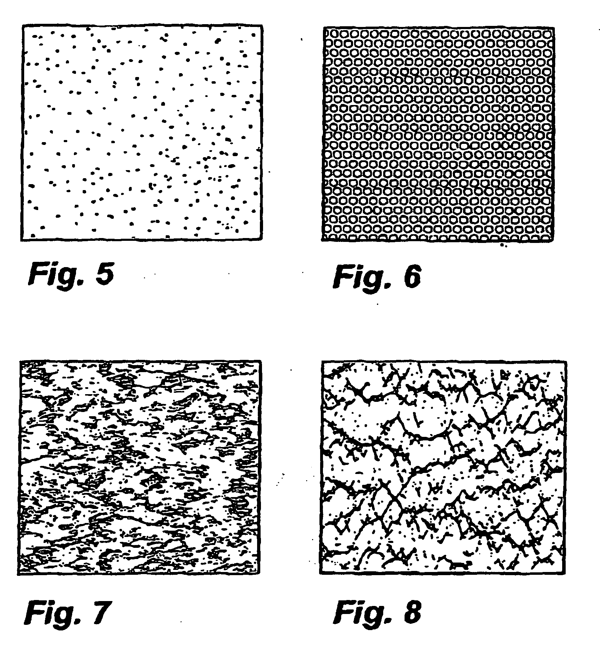

Fig. 5 illustrates a first example of a grip-enhancing surface structure, which can be achieved by adding grains and/or flakes to the polymer pulp before the film blowing to form the polymer tube is carried out, or in connection therewith. It will be appreciated that grains and/or flakes can also be applied to the surface of the plastic tube after the tube 21 or the blank 22 is formed. The grains or flakes may, for example, be of a plastic material having a higher density and/or melting point than the material of which the polymer tube is formed. For example, the polymer tube may be made of low-density polyethylene (PE-LD), the grains or flakes being made of high-density polyethylene (PE-HP) or of polypropylene. According to other embodiments, the grains or flakes may consist of sawdust, fine sand, lime and/or solid or hollow micro glass spheres.

Another way of achieving a surface similar to that shown in Fig. 5 is to apply a lacquer to the outside of the piping bag, which lacquer is provided with a surface structure-forming additive, for example additives of the kind described above.

Fig. 6 illustrates a second example of a grip-enhancing surface structure, which can be achieved by rolling the polymer tube 21, for example as shown in Fig. 3, through an embossed roll, if necessary under the influence of heat, which allows the polymer tube to be provided with, for example, a granular (Fig. 6) or grooved (not shown) structure.

According to one embodiment, the polymer tube can be made of at least two laminated polymer material layers. A polymer tube of this kind may have a plurality of layers having different functions, for instance an inner layer intended to facilitate the feeding of flowable paste and prevent said paste from adhering to the inner walls of the piping bag and intended to facilitate the introduction of the nozzle 2; a gas-tight layer, a supporting layer and/or an outer grip-enhancing layer. It is obvious to the skilled person how to obtain a laminated polymer tube by simultaneous extrusion and film blowing of inner and outer layers. Another prior-art manner of obtaining a laminated plastic film is to join two film layers using, for example, and adhesive and/or heating.

The above methods of providing a grip-enhancing surface structure can be used both in one-layer piping bags and in laminated piping bags. The surface structure described with reference to Fig. 5 is highly suitable for laminated piping bags, since it is sufficient to add grains or flakes to the material forming the outer layer of the polymer tube.

Fig. 7 illustrates a further example of a grip-enhancing surface structure, which can be achieved by adding an expanding agent to the material of which an outer layer of a laminated polymer tube is formed. The skilled person is familiar with the art of expanding. By exposing, after film blowing, the polymer tube 21 to heat the expanding agent is caused to release a gas, bubbles being formed in the outer surface of the polymer tube, which bubbles burst, thus creating a rough surface the structure of which may be of the kind shown in Fig. 7. Non-limiting examples of expanding agents are bicarbonate, AZO-dicarbonate amide and water.

Yet another example of a grip-enhancing surface structure is shown in Fig. 8 and can be achieved by means of starve-feeding. Starve-feeding can be done using pure plastic or with a filler additive, such as silicates, chalk, carbonates, small glass beads, fine sand, etc, which is added to the material of which an outer layer of a polymer tube is formed. The skilled person is familiar with the process of starve-feeding. The extrusion apparatus used to feed the outer layer material is starve-fed, which results in a surface structure similar to that of Fig. 7 being obtained. In this case, the concentration and friction of the filler can be varied to obtain the desired surface roughness.

A further example of a grip-enhancing surface structure similar to those shown in Fig. 7 or Fig. 8 can be achieved by means of cold-feeding, wherein the outer layer is starve-fed and the extruder is operated at a lower temperature than normal. In this case, no filler is needed. The skilled person is familiar with the art of cold-feeding.

The ways of achieving a grip-enhancing surface structure described above are combined with the addition of known friction-enhancing agents, for example viscous high-molecular liquids such as polyisobutylene and/or glycerol esters.

According to one embodiment, the surface structure described with reference to Fig. 5 is combined with the surface structure described with reference to Fig. 7 or Fig. 8. This embodiment is combined with the surface structure described with reference to Fig. 6, and/or a friction-enhancing agent.

According to another embodiment, the surface structure described with reference to Fig. 7 or Fig. 8 is combined with the surface structure described with reference to Fig. 6. This embodiment is combined with a friction-enhancing agent.

## Claims

1. A disposable piping bag (1), comprising a container of polymer film, **characterised in that**
the piping bag is made essentially from a thin-walled polymer tube,
an outwardly oriented surface of the piping bag is provided with a rough surface structure, the roughness of which increases the friction between the user's hand and the piping bag, and
the outwardly oriented surface of the polymer tube comprises friction-enhancing agents
wherein the surface structure is formed by at least one of
a) adding grains or flakes to the material of which the thin-walled polymer tube is made,
b) pattern-rolling the polymer tube, and
c) applying a lacquer to the outwardly oriented surface combined with adding grains or flakes to the lacquer.

2. A piping bag (1) according to the preceding claim,
wherein the thin-walled polymer tube is made of a plastic film, preferably of polyolefin plastic.

3. A piping bag (1) according to anyone of the preceding claims,
wherein the thin-walled polymer tube is essentially transparent.

4. A disposable piping bag (1), comprising a container of polymer film, **characterised in that**
the piping bag is made essentially from a thin-walled polymer tube,
an outwardly oriented surface of the piping bag is provided with a rough surface structure, the roughness of which increases the friction between the user's hand and the piping bag, and
the outwardly oriented surface of the polymer tube comprises friction-enhancing agents
wherein a wall of the thin-walled polymer tube consists of at least two laminated material layers, an outer material layer of which being provided with the rough surface structure, and
wherein the surface structure is formed by at least one of
c) at least partly expanding the outer material layer,
d) at least partly starve-feeding the outer material layer, and
e) at least partly cold-feeding the outer material layer.

5. A piping bag (1) according to any one of the preceding claims,
wherein the thin-walled polymer tube has a severance mark (8) that is transversal to the longitudinal direction (D1) of the tube.

6. A piping bag (1) according to claim 5, wherein the thin-walled tube has a joint (7), preferably a welding joint, that is parallel to the severance mark (8).

7. A blank (30) for manufacturing at least two disposable piping bags (1, 31, 31'), each comprising a container of polymer film, **characterised in that**
the blank consists of an elongated thin-walled polymer tube (21, 22),
the piping bags (1, 31, 31') being detachable from one another by means of severance mark (8), and
an outwardly oriented surface of the thin-walled polymer tuber is provided with a rough surface structure, the roughness of which increases the friction between the user's hand and the piping bag, and
the outwardly oriented surface of the polymer tube comprises friction-enhancing agents,
wherein the surface structure is formed by at least one of
a) adding grains or flakes to the material of which the thin-walled polymer tube is made,
b) pattern-rolling the polymer tube, and
c) applying a lacquer to the outwardly oriented surface combined with adding grains or flakes to the lacquer.

8. A blank (30) for manufacturing at least two disposable piping bags (1, 31, 31'), each comprising a container of polymer film,
**characterised in that**
the blank consists of an elongated thin-walled polymer tube (21, 22), the piping bags (1, 31, 31') being detachable from one another by means of severance mark (8), and
an outwardly oriented surface of the thin-walled polymer tuber is provided with a rough surface structure, the roughness of which increases the friction between the user's hand and the piping bag,and
the outwardly oriented surface of the polymer tube comprises friction-enhancing agents,
wherein a wall of the thin-walled polymer tube consists of at least two laminated material layers, an outer material layer of which being provided with the rough surface structure, and
wherein the surface structure is formed by at least one of
c) at least partly expanding the outer material layer,
d) at least partly starve-feeding the outer material layer, and
e) at least partly cold-feeding the outer material layer.

9. A method of manufacturing a disposable pip-ing bag (1) comprising a container of polymer film, **characterised by**
making the piping bag essentially from a thin-walled polymer tube, and
providing an outwardly oriented surface of the thin-walled polymer tube with a rough surface structure, the roughness of which increases the friction between the user's hand and the piping bag, and
providing the outwardly oriented surface of the polymer tube with friction-enhancing agents.
wherein the step of providing the outwardly oriented surface with a rough surface structure comprises
adding grains or flakes to the material of which the thin-walled polymer tube is made, and/or
pattern-rolling the thin-walled polymer tube.

10. A method of manufacturing a disposable pip-ing bag (1) comprising a container of polymer film, **characterised by**
making the piping bag essentially from a thin-walled polymer tube, and
providing an outwardly oriented surface of the thin-walled polymer tube with a rough surface structure, the roughness of which increases the friction between the user's hand and the piping bag, and
providing the outwardly oriented surface of the polymer tube with friction-enhancing agents, and
forming the thin-walled polymer tube by laminating at least two material layers, an outer material layer being provided with the surface structure,
wherein
the step of providing the outwardly oriented surface with a surface structure comprises
at least partly expanding the material of which an outer layer of the thin-walled polymer tube is made,
at least partly starve-feeding the material of which an outer layer of the thin-walled polymer tube is made, and/or
at least partly cold-feeding the material of which an outer layer of the thin-walled polymer tube is made.

## Patentansprüche

1. Ein Spritzbeutel (1) als Einwegartikel, umfassend einen Container aus Polymerfolie,
**dadurch gekennzeichnet, dass** der Spritzbeutel im Wesentlichen aus einem dünnwandigen Polymerschlauch hergestellt ist, wobei eine nach außen orientierte Oberfläche des Spritzbeutels mit einer rauen Oberflächenstruktur versehen ist, wobei die Rauigkeit die Reibung zwischen der Hand eines Benutzers und des Spritzbeutels erhöht, und die nach außen orientierte Oberfläche des Polymerschlauchs reibungserhöhende Zusätze aufweist, wobei die Oberflächenstruktur aus zumindest einem der nachfolgenden Merkmale gebildet ist:
a) Hinzufügen von Körner oder Flocken zu dem Material, aus welchem der dünnwandige Polymerschlauch besteht,
b) Profilierung des Polymerschlauchs, und
c) Aufbringung einer Lackschicht auf die nach außen hin orientierte Oberfläche, kombiniert mit dem Hinzufügen von Körnern oder Flocken zu der Lackschicht.

2. Ein Spritzbeutel (1) nach dem vorstehenden Anspruch,
wobei der dünnwandige Polymerschlauch aus einem Kunststofffilm, vorzugsweise aus Polyolefin-Kunststoff, hergestellt ist.

3. Ein Spritzbeutel (1) nach einem der vorstehenden Ansprüche,
wobei der dünnwandige Polymerschlauch vorzugsweise transparent ausgebildet ist.

4. Ein Spritzbeutel (1) als Einwegartikel, umfassend einen Container aus Polymerfolie,
**dadurch gekennzeichnet, dass** der Spritzbeutel im Wesentlichen aus einem dünnwandigen Polymerschlauch hergestellt ist, wobei eine nach außen orientierte Oberfläche des Spritzbeutels mit einer rauen Oberflächenstruktur versehen ist, wobei die Rauigkeit die Reibung zwischen der Hand eines Benutzers und des Spritzbeutels erhöht, und die nach außen orientierte Oberfläche des Polymerschlauchs reibungserhöhende Zusätze aufweist, wobei eine Wandung des dünnwandigen Polymerschlauchs aus zumindest zwei laminierten Materialschichten besteht, wobei eine äußere Materialschicht mit der rauen Oberflächenstruktur ausgebildet ist, und wobei die Oberflächenstruktur aus zumindest einem der nachfolgenden Merkmale gebildet ist:
c) eine zumindest partielle Aufweitung der äußeren Materialschicht,
d) eine zumindest partielle Schrumpfung der äußeren Materialschicht, und
e) eine zumindest partielle Schrumpelung der äußeren Materialschicht.

5. Ein Spritzbeutel (1) nach einem der vorstehenden Ansprüche,
wobei der dünnwandige Polymerschlauch eine Trennungsmarkierung (8) aufweist, welche quer zur Längsrichtung (D1) des Schlauchs verläuft.

6. Ein Spritzbeutel (1) nach Anspruch 5,
wobei der dünnwandige Schlauch eine Fügenaht (7), vorzugsweise in Form eines Schweißstoßes, aufweist, die parallel zur Trennungsmarkierung (8) verläuft.

7. Ein Zuschnitt (30) zur Herstellung von zumindest zwei Spritzbeuteln (1, 31, 31') als Einwegartikel, die jeweils einen Container aus einem Polymerfilm umfassen, **dadurch gekennzeichnet, dass** der Zuschnitt aus einem langgestreckten dünnwandigen Polymerschlauch (21, 22) besteht, wobei die Spritzbeutel (1,31,31') trennbar voneinander durch eine Trennmarkierung (8) angeordnet sind, und eine nach außen hin orientierte Oberfläche des dünnwandigen Polymerschlauchs mit einer unebenen Oberflächenstruktur versehen ist, wobei die Rauigkeit die Reibung zwischen der Hand eines Benutzers und des Spritzbeutels erhöht, und die nach außen hin orientierte Oberfläche des Polymerschlauchs reibungserhöhende Zusätze umfasst, wobei die Oberflächenstruktur aus zumindest einem der nachfolgenden Merkmale gebildet ist:
a) Hinzufügen von Körner oder Flocken zu dem Material, aus welchem der dünnwandige Polymerschlauch besteht,
b) Profilierung des Polymerschlauchs, und
c) Aufbringung einer Lackschicht auf die nach außen hin orientierte Oberfläche, kombiniert mit dem Hinzufügen von Körnern oder Flocken zu der Lackschicht.

8. Ein Zuschnitt (30) zur Herstellung von zumindest zwei Spritzbeuteln (1,31, 31') als Einwegartikel, die jeweils einen Container aus einem Polymerfilm umfassen, **dadurch gekennzeichnet, dass** der Zuschnitt aus einem langgestreckten dünnwandigen Polymerschlauch (21, 22) besteht, wobei die Spritzbeutel (1,31,31') trennbar voneinander durch eine Trennmarkierung (8) angeordnet sind, und eine nach außen hin orientierte Oberfläche des dünnwandigen Polymerschlauchs mit einer unebenen Oberflächenstruktur versehen ist, wobei die Rauigkeit die Reibung zwischen der Hand eines Benutzers und des Spritzbeutels erhöht, und die nach außen hin orientierte Oberfläche des Polymerschlauchs reibungserhöhende Zusätze umfasst, wobei eine Wandung des dünnwandigen Polymerschlauchs aus zumindest zwei laminierten Materialschichten besteht, wobei eine äußere Materialschicht mit der rauen Oberflächenstruktur ausgebildet ist, und wobei die Oberflächenstruktur aus zumindest einem der nachfolgenden Merkmale gebildet ist:
c) eine zumindest partielle Aufweitung der äußeren Materialschicht,
d) eine zumindest partielle Schrumpfung der äußeren Materialschicht, und
e) eine zumindest partielle Schrumpelung der äußeren Materialschicht.

9. Ein Verfahren zur Herstellung eines Spritzbeutels (1) als Einwegartikel, umfassend einen Container aus einer Polymerfolie,
**gekennzeichnet durch** folgende Verfahrensschritte:
• Herstellung des Spritzbeutels im Wesentlichen aus einem dünnwandigen Polymerschlauch, und
• Schaffung einer nach außen hin orientierten Oberfläche des dünnwandigen Polymerschlauchs, die mit einer rauen Oberflächenstruktur versehen ist, wobei die Rauigkeit die Reibung zwischen der Hand eines Benutzers und des Spritzbeutels erhöht, und
• Versehen der nach außen hin orientierte Oberfläche des Polymerschlauchs mit reibungserhöhenden Zusätzen,
wobei die Schaffung einer nach außen hin orientierten Oberfläche mit einer rauen Oberflächenstruktur eine Hinzufügung von Körnern oder Flocken zu dem Material, aus welchem der dünnwandige Polymerschlauch hergestellt ist, umfasst, und/oder Profilierungswalzen des dünnwandigen Polymerschlauchs.

10. Ein Verfahren zur Herstellung eines Spritzbeutels (1) als Einwegartikel, umfassend einen Container aus einer Polymerfolie,
**gekennzeichnet durch** folgende Verfahrensschritte:
• Herstellung des Spritzbeutels im Wesentlichen aus einem dünnwandigen Polymerschlauch, und
• Schaffung einer nach außen hin orientierten Oberfläche des dünnwandigen Polymerschlauchs, die mit einer rauen Oberflächenstruktur versehen ist, wobei die Rauigkeit die Reibung zwischen der Hand eines Benutzers und des Spritzbeutels erhöht, und
• Versehen der nach außen hin orientierte Oberfläche des Polymerschlauchs mit reibungserhöhenden Zusätzen,
• Bildung eines dünnwandigen Polymerschlauchs **durch** Laminieren von zumindest zwei Materialschichten, wobei eine äußere Materialschicht mit der Oberflächenstruktur versehen wird,
wobei die Bildung der nach außen hin orientierten Oberfläche mit der Oberflächenstruktur eine zumindest partielle Aufweitung des Materials, aus welchem die äußere Schicht des dünnwandigen Polymerschlauchs besteht, umfasst,
eine zumindest partielle Schrumpfung des Materials, aus dem die äußere Schicht des dünnwandigen Polymerschlauchs besteht, umfasst, und/oder
eine zumindest partielle Schrumpelung des Materials, aus welchem die äußere Schicht des dünnwandigen Polymerschlauchs besteht, umfasst.

## Revendications

1. Poche à douille jetable (1), comprenant un contenant en film polymère, **caractérisée en ce que**
la poche à douille est fabriquée essentiellement à partir d'un tube polymère à paroi mince,
une surface orientée vers l'extérieur de la poche à douille est pourvue d'une structure superficielle rugueuse, la rugueusité de celle-ci augmente le frottement entre la main de l'utilisateur et la poche à douille, et
la surface orientée vers l'extérieur du tube polymère comprend des agents favorisant le frottement,
dans laquelle la structure de la surface est formée par au moins une des étapes consistant à
a) ajouter des grains ou flocons au matériau dans lequel est fabriqué le tube polymère à paroi mince,
b) gaufrer le tube polymère, et
c) appliquer une laque sur la surface orientée vers l'extérieur et ajouter des grains ou flocons à la laque.

2. Poche à douille (1) selon la revendication précédente, dans laquelle le tube polymère à paroi mince est fabriqué dans un film plastique, de préférence un plastique polyoléfinique.

3. Poche à douille (1) selon l'une quelconque des revendications précédentes, dans laquelle le tube polymère à paroi mince est essentiellement transparent.

4. Poche à douille (1) selon l'une quelconque des revendications précédentes, **caractérisée en ce que**
la poche à douille est fabriquée essentiellement à partir d'un tube polymère à paroi mince,
une surface orientée vers l'extérieur de la poche à douille est pourvue d'une structure superficielle rugueuse, la rugueusité de celle-ci augmente le frottement entre la main de l'utilisateur et la poche à douille, et
la surface orientée vers l'extérieur du tube polymère comprend des agents favorisant le frottement,
dans laquelle une paroi du tube polymère à paroi mince est composée d'au moins deux couches de matériau laminées, dont une couche de matériau externe est pourvue de la structure superficielle rugueuse, et
dans laquelle la structure superficielle est formée par au moins une des étapes consistant à
c) gonfler au moins partiellement la couche de matériau externe,
d) sous-alimenter au moins partiellement la couche de matériau externe, et
e) alimenter à froid au moins partiellement la couche de matériau externe.

5. Poche à douille (1) selon l'une quelconque des revendications précédentes, dans laquelle le tube polymère à paroi mince présente une marque de séparation (8) qui est transverse par rapport au sens longitudinal (D1) du tube.

6. Poche à douille (1) selon la revendication 5, dans laquelle le tube à paroi mince présente un joint (7), de préférence un joint de soudure, qui est parallèle à la marque de séparation (8).

7. Flan (30) destiné à fabriquer au moins deux poches à douille jetables (1, 31, 31'), chacune comprenant un contenant en film polymère, **caractérisé en ce que**
le flan est composé d'un tube polymère à paroi mince allongé (21, 22),
les poches à douille (1, 31, 31') étant détachables les unes des autres au moyen d'une marque de séparation (8), et
une surface orientée vers l'extérieur du tube polymère à paroi mince est pourvue d'une structure superficielle rugueuse, la rugueusité de celle-ci augmente le frottement entre la main de l'utilisateur et la poche à douille, et
la surface orientée vers l'extérieur du tube polymère comprend des agents favorisant le frottement,
dans laquelle la structure superficielle est formée par au moins une des étapes consistant à
a) ajouter des grains ou flocons au matériau dans lequel est fabriqué le tube polymère à paroi mince,
b) gaufrer le tube polymère, et
c) appliquer une laque sur la surface orientée vers l'extérieur et ajouter des grains ou flocons à la laque.

8. Flan (30) destiné à fabriquer au moins deux poches à douille jetables (1, 31, 31'), chacune comprenant un contenant en film polymère, **caractérisé en ce que**
le flan est composé d'un tube polymère à paroi mince allongé (21, 22),
les poches à douille (1, 31, 31') étant détachables les unes des autres au moyen d'une marque de séparation (8), et
une surface orientée vers l'extérieur du tube polymère à paroi mince est pourvue d'une structure superficielle rugueuse, la rugueusité de celle-ci augmente le frottement entre la main de l'utilisateur et la poche à douille, et
la surface orientée vers l'extérieur du tube polymère comprend des agents favorisant le frottement,
dans laquelle une paroi du tube polymère à paroi mince est composée d'au moins deux couches de matériau laminées, dont une couche de matériau externe est pourvue de la structure superficielle rugueuse, et
dans laquelle la structure superficielle est formée par au moins une des étapes consistant à
c) gonfler au moins partiellement la couche de matériau externe,
d) sous-alimenter au moins partiellement la couche de matériau externe, et
e) alimenter à froid au moins partiellement la couche de matériau externe.

9. Procédé de fabrication d'une poche à douille jetable (1) comprenant un contenant en film polymère, **caractérisé en ce que** comprend les étapes suivantes
fabriquer la poche à douille essentiellement à partir d'un tube polymère à paroi mince, et
munir une surface orientée vers l'extérieur du tube polymère à paroi mince d'une structure superficielle rugueuse, la rugueusité de celle-ci augmente le frottement entre la main de l'utilisateur et la poche à douille, et
munir la surface orientée vers l'extérieur du tube polymère à paroi mince d'agents favorisant le frottement,
dans lequel l'étape destinée à munir la surface orientée vers l'extérieur du tube polymère à paroi mince d'une structure superficielle rugueuse consiste à
ajouter des grains ou flocons au matériau dans lequel est fabriqué le tube polymère à paroi mince, et/ou
gaufrer le tube polymère à paroi mince.

10. Procédé de fabrication d'une poche à douille jetable (1) comprenant un contenant en film polymère, **caractérisé en ce que** comprend les étapes suivantes
fabriquer la poche à douille essentiellement à partir d'un tube polymère à paroi mince, et
munir une surface orientée vers l'extérieur du tube polymère à paroi mince d'une structure superficielle rugueuse, la rugueusité de celle-ci augmente le frottement entre la main de l'utilisateur et la poche à douille, et
munir la surface orientée vers l'extérieur du tube polymère à paroi mince d'agents favorisant le frottement,
former le tube polymère à paroi mince en laminant au moins deux couches de matériau, une couche de matériau externe étant pourvue de la structure superficielle,
dans lequel l'étape destinée à munir la surface orientée vers l'extérieur d'une structure superficielle rugueuse consiste à
gonfler au moins partiellement le matériau dans lequel est fabriquée une couche externe du tube polymère à paroi mince,
sous-alimenter au moins partiellement le matériau dans lequel est réalisée une couche externe du tube polymère à paroi mince, et/ou
alimenter à froid au moins partiellement le matériau dans lequel est réalisée une couche externe du tube polymère à paroi mince.
